(19) Europäisches Patentamt

European Patent Office

Office européen des brevets

(11) **EP 0 971 246 A1**

(12) **EUROPEAN PATENT APPLICATION**
published in accordance with Art. 158(3) EPC

(43) Date of publication:
**12.01.2000 Bulletin 2000/02**

(51) Int. Cl.[7]: **G02B 5/02**, G02F 1/1335,
F21V 8/00, G09F 9/00,
C09C 1/40

(21) Application number: **98900733.1**

(22) Date of filing: **26.01.1998**

(86) International application number:
**PCT/JP98/00297**

(87) International publication number:
**WO 99/38036 (29.07.1999 Gazette 1999/30)**

(84) Designated Contracting States:
**DE FR GB IT NL**

(71) Applicant:
**SHISEIDO COMPANY LIMITED
Chuo-ku Tokyo 104-10 (JP)**

(72) Inventors:
• **MIYAMOTO, Tsuyoshi,
Shiseido Research Center (1)
Kanagawa 223 (JP)**

• **KIMURA, Asa,
Shiseido Research Center (1)
Kanagawa 223 (JP)**

(74) Representative:
**Henkel, Feiler, Hänzel
Möhlstrasse 37
81675 München (DE)**

(54) **DIFFUSER, ILLUMINATING DEVICE AND LIQUID CRYSTAL DISPLAY**

(57) An object of the present invention is to provide a diffusing film, a lighting unit, and a liquid crystal display which can obtain a brighter and more beautiful display.

The diffusing film comprises a diffusing particle which comprises a uniformly dispersed colored pearly pigment coated titanium composite oxide or titanium composite oxide and titanium dioxide on the surface of mica. A diffusing light is adjusted by a color tone of titanium composite oxide. And, the lighting unit and the liquid crystal display that used it can be provided.

FIG. 8

## Description

FIELD OF THE INVENTION

The present invention relates to a diffusing film, a lighting unit, and a colored liquid crystal display of mono-colored display and in particular, relates to an improvement of its color tone and design.

BACKGROUND OF THE INVENTION

A liquid crystal display is used as the display such as a portable telephone, an electronic notebook, and the like in the conventional, since the display is thin-type and lightweight. This liquid crystal display indicates image by controlling light transmission/shielding from an external or internal light source by means of a liquid crystal shutter, since it does not emit light itself which is unlike a plasma display. Namely, in general, a diffusing film is inserted into the backside of a liquid crystal panel in a liquid crystal display. The reflective mode liquid crystal display uses an external light which uses a reflective film that has high diffused reflectance. The reflective film scatters and reflects the external light which is entered from the obverse side of the liquid crystal panel and returns to the liquid crystal panel. Transmission/shielding is controlled by means of a liquid crystal shutter (reflective diffusing film). While the transmissive mode liquid crystal display using an internal light uses the diffusing film which has high diffuse transmittance. The diffusing film diffuses and transmits the internal light from the reverse side of the liquid crystal panel and provides the light to the liquid crystal panel. Transmission/shielding of light is controlled by means of the liquid crystal shutter (transmissive diffusing film). Further, as for the type which properly uses external light and internal light according to ON/OFF of the internal light source, the diffusing film which has the capacity between the reflective diffusing film and the transmissive diffusing film can be used (semitransmissive diffusing film).

In addition, a display used in the portable telephone, the electronic notebook, and the like, are mostly powered by a battery. In a full-color liquid crystal display, a black-and-white display is mainly used for powering with lower power, since the internal light source which has relative high light volume is required.

However, a colored liquid crystal display is mainly used in a notebook personal computer and the like. Also, a mono-colored liquid crystal display is popularly used in the portable telephone, the electronic notebook, and the like, unlike a black-and-white display in the conventional.

As the technology that displays it the color of mono-colored display like this, the liquid crystal display that added a pigment to a diffusing film or guest-host type liquid crystal display, are known well.

The above-mentioned liquid crystal display with coloring dyes added to the diffusing film can obtain the transmitted light of the desired color by using the coloring dyes which can absorb the light of specific wave range to the diffusing film.

The above-mentioned guest-host type liquid crystal display uses a mixture of dichromatic coloring dyes as the liquid crystal and changes the color of the transmitted light and its intensity by controlling the direction of the coloring dyes molecular to the incident light by the change of molecular orientation of the liquid crystal.

However, in the above-mentioned liquid crystal display which uses the coloring dyes in the diffusing film, the coloring dyes used in the diffusing film are sometimes discolored by the back-light or the light from the outside.

On the other hand, in the guest-host type liquid crystal display, the physical properties of the liquid crystal are sometimes spoiled by the mixed coloring dyes.

Also, the coloring dyes are sometimes caused denaturation by the back-light or the light from the outside.

When titanated mica which has colored interference light was used in place of the coloring dyes, the problems of permanence can be improved in certain degree. However, titanated mica is generally weak of color tone and cannot sufficiently meet the requirements of consumer.

SUMMARY OF THE INVENTION

In view of the foregoing problems of the prior art, an object of the present invention is to provide a diffusing film, a lighting unit, and a liquid crystal display which can obtain more bright and beautiful mono-colored display and excellent design

To attain the above-mentioned object, the present inventors paid attention to titanated mica (titanium dioxide coated mica) as the light scattering material for the diffusing film and studied to tone the specific weak color tone of titanated mica. As a result, the present inventors found that a diffusing film which has a vivid color tone can be obtained without spoiling the light diffusibility of titanated mica by coating a titanium composite oxide or a titanium composite oxide and titanium dioxide on the surface of mica and by toning the color tone of the titanated mica by the color tone of the titanium composite oxide.

Namely, a diffusing film of the present invention is characterized in that a diffusing particle comprising a colored pearly pigment which is coated with a titanium composite oxide or a titanium dioxide and a titanium composite oxide on the surface of mica, exists in uniform dispersion and that an incident light is adjusted by the color tone of the titanium composite oxide.

As for the titanium composite oxide, the composite oxide of titanium and one or more of metals which is selected from the group consisting of sodium, potassium, rubidium, magnesium, calcium, strontium, barium, zinc, aluminium, silver, tin, cesium, cerium, copper, lead, neodymium, bismuth, manganese, iron, lanthanum, cobalt, nickel, lithium, and chromium are listed as examples. These composite oxides are colored in general. However, color tone of these composite oxide is monotonous and subtle color toning cannot be conducted in the case where only the composite oxide is used.

For that reason, in the present invention, the titanium composite oxide or titanium dioxide and the titanium composite oxide is coated on the surface of mica and color tone is toned by the titanium composite oxide.

Also, in the diffusing film of the present invention, it is preferable that particle diameter of the colored pearly pigment is 10 to 300 μm.

Also, in the diffusing film of the present invention, green transmitted light can be obtained in the case where the metals of the titanium composite oxide coated on the colored pearly pigment are titanium, lithium and cobalt.

And also, in order to obtain the above-mentioned diffusing film stated in here, it is preferable that the composition percentage of the colored pearly pigment is within the range of 41 to 55 wt% of mica, 22 to 33 wt% of titanium dioxide, and 20 to 28 wt% of lithium cobalt titanate.

Also, in the diffusing film of the present invention, blue transmitted light can be obtained in the case where the metals of the titanium composite oxide coated on the colored pearly pigment are titanium, lithium and cobalt.

Also, in order to obtain the above-mentioned diffusing film stated in here, it is preferable that the composition percentage of the colored pearly pigment is within the range of 39 to 48 wt% of mica, 12 to 16 wt% of titanium dioxide, 37 to 47 wt% of lithium cobalt titanate.

Also, in the diffusing film of the present invention, yellow interference light can be obtained in the case where the metals of the titanium composite oxide coated on the colored pearly pigment are titanium and nickel.

And also, in order to obtain the above-mentioned diffusing film stated in here, it is preferable that the composition percentage of the metals is 45 to 90 wt% of titanium and 10 to 55 wt% of nickel with respect to the whole amount of the metals in the titanium composite oxide.

Further, in the above-mentioned diffusing film of the present invention, it is preferable that the metals composed of the titanium composite oxide are comprised of titanium, nickel, and a third metal ingredient. Also, it is more preferable that the third metal ingredient is one or more metals which is selected from the group consisting of Zn, Rb, K, Ba, Sc, Sn, Na, Bi, Pb, Mg, Al, Ce, Nd, and Sr.

In the colored pearly pigment, it is preferable that the percentages of titanium, nickel, and the third ingredients which composed of titanium composite oxide by coating, are 45 to 90 wt% of titanium, 9 to 30 wt% of nickel, and 1 to 25 wt% of the third ingredient with respect to the whole amount of the titanium composite oxide.

Also, in the diffusing film of the present invention, red transmitted light can be obtained in the case where the metals of titanium composite oxide coated on the colored pearly pigment are titanium, iron, and nickel.

And also, in order to obtain the above-mentioned diffusing film stated in here, it is preferable that the composition percentage of the metals is 60 to 95 wt% of titanium, 1 to 24 wt% of iron, and 1 to 24 wt% of nickel, with respect to the whole amount of the metals in the titanium composite oxide.

Also, it is preferable to use the colored pearly pigment which is further coated with the titanium dioxide. Also, the diffusing film which has high efficiency of light can be obtained by using the pigment which is further coated with titanium dioxide.

Also, in the diffusing film of the present invention, it is preferable that the colored pearly pigment is calcined at 500 to 1200°C.

And also, to attain the above-mentioned object, the lighting unit of the present invention comprises a light source and a diffusing film.

The light source irradiates a light.

In the diffusing film, a diffusing particle comprising the colored pearly pigment which coated titanium composite oxide or titanium dioxide and titanium composite oxide on the surface of mica exits in uniform dispersion. The diffusing film adjusts the light from the light source by color tone of the titanium composite oxide.

And also, to attain the above-mentioned object, the present invention comprises a liquid crystal display containing a light source which irradiates a light, a diffusing film which transmits or reflects the light from the light source as a scattered light, and a liquid crystal panel which controls a light from the diffusing film to transmit or shield by changing the voltage applied to a liquid crystal layer. The diffusing film comprises a diffusing particle which is a colored pearly pigment coated with titanium composite oxide or titanium dioxide and titanium composite oxide on the surface of mica and is uniformly dispersed in the diffusing film.

BRIEF DESCRIPTION OF THE DRAWINGS

Fig. 1 is an explanatory view of a conventional pearly pigment.

Fig. 2 is an explanatory view of the pearly pigment which is shown in Fig. 1.

Fig. 3 is an explanatory view of a liquid crystal display module using the diffusing film in accordance with one embodiment of the present invention.

Fig. 4 is an explanatory view of a liquid crystal module in accordance with one embodiment of the present invention.

Fig. 5 is transmittance spectrum and reflectance spectrum of semitransmission diffusing film of Example 1 in accordance with the present invention.

Fig. 6 is transmittance spectrum and reflectance spectrum of semitransmission diffusing film of Example 2 in accordance with the present invention.

Fig. 7 is transmittance spectrum and reflectance spectrum of semitransmission diffusing film of Example 3 in accordance with the present invention.

Fig. 8 is transmittance spectrum and reflectance spectrum of semitransmission diffusing film of Example 4 in accordance with the present invention.

Fig. 9 is an explanatory view showing the relation between the amount and color tone of titanium dioxide in the most external layer in the pigment that the titanium composite oxide of red pearly pigment which can be used in the diffusing film of the present invention, further coated with titanium dioxide.

BEST MODE FOR CARRYING OUT THE INVENTION

In the diffusing film of the present invention, as described above, a diffusing particle comprising a colored pearly pigment coated with titanium composite oxide or titanium dioxide and the titanium composite oxide on the surface of mica exists in uniform dispersion. The diffusing film of the present invention can obtain transmitted diffusion light or reflected diffusion light of vivid color tone by toning the color tone of the titanium composite oxide without spoiling the light diffusibility of titanated mica.

Also, the light is favorably diffused by adjusting the amount of diffusing particles comprising the colored pearly pigment to 1 wt% or more.

Namely, transmittance of the light is high and the large part of the light transmits without diffusion in the case where the amount of diffusing particles comprising the colored pearly pigment is less than 1 wt%.

Explanation of Conventional Pearly Pigment

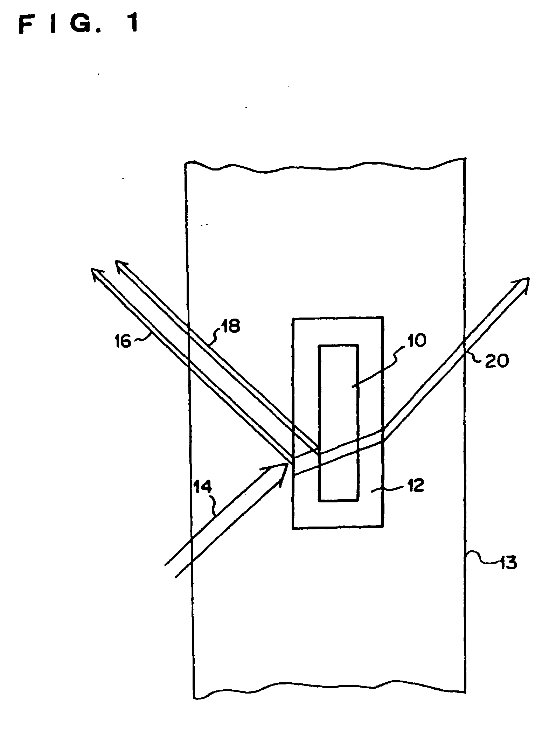

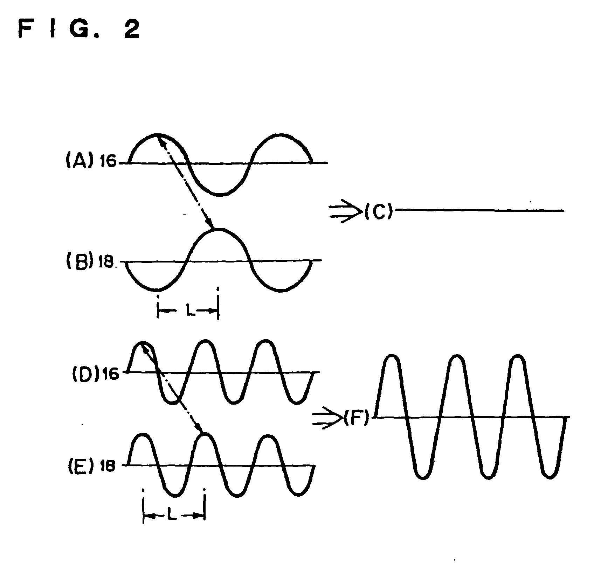

The present inventors used the colored pearly pigment for the diffusing film. A prior art conventional colored pearly pigment such as titanated mica is explained in Fig. 1 and Fig. 2.

Fig. 1 is a typical pearly pigment.

In Fig. 1, mica 10 is scaly and titanium dioxide 12 is coated onto mica and is surrounding mica in a thin-layer state.

Such pearly pigment has reflected interference color of various color tones.

In the case where the pearly pigment receives white light 14, one part of the light is reflected on the boundary of a transparent base 13-titanium dioxide 12 and on the boundary of titanium dioxide 12-mica 10.

Each of the reflected light 16 and 18 has optical path, the difference between optical path 16 and 18 depends on the layer thickness of titanium dioxide 12.

As a result, a reflected interference light is arisen as shown in Fig. 2.

Namely, in view of optical path difference L (=almost twice of the layer thickness of titanium dioxide), the top portion of the optical component of the reflected light 16 is located on the bottom portion of the optical component of the reflected light 18 in the optical component which has the wavelength of the reflected light 16 as shown in Fig. 2 (A) and the optical component which has the wavelength of the reflected light 18 as shown in Fig. 2 (B). So, both optical components are weaken each other and are externally disappeared as shown in Fig. 2(C).

However, in the case where the optical component is half wave of Fig 2 (A) as shown in Fig. 2 (D), each of the optical component of the reflected light 16 and 18 shifts for one wavelength. Both the top portion and the bottom portion are overlapped each other and the amplitude is amplified as shown in Fig. 2 (F).

As a result of this, when the reflected light 16 and 18 are observed, the light which has the wavelength shown in Fig. 2 (A) and (B) comes to invisible in external due to interference action. On the other hand, the light which has the wavelength shown in Fig. 2 (C) and (D) are amplified and this is observed as the reflected interference light.

However, the reflected interference light is relative weak and cannot be observed as color tone. On the other hand, a transmitted light 20 is in a complementary relation with the reflected interference light. However, it is difficult to obtain vivid color tone because the transmitted light 20 is also relatively weak.

Explanation of the Colored Pearly Pigments of the Present Invention

Accordingly, the present inventors tried to tone the reflected interference light or transmitted light using the color tone of titanium composite oxide.

As a result of this, an excellent diffusing film is established. This diffusing film has equal or more bright color tone than the conventional liquid crystal display without using the conventional coloring dyes and guest host type liquid crystal display.

Also, in the present invention, in the case where the optical layer thickness of the total titanium oxide is less than 40nm, it is difficult to obtain compensation effect of color tone by titanium composite oxide, because interference light itself has strong tendency to become achromatic color.

Also, in the present invention, a colored reflected interference color can obtain, when layer thickness of the total titanium oxide is 40nm or more. Specifically, interference color of gold, red, violet, blue or green can be displayed.

Also, various processes is adopted to manufacture the colored pearly pigment used in the diffusing film of the present invention. Examples will be shown in the following working examples.

Also, it is preferable to calcine the colored pearly pigment of the present invention at 500 to 1200°C, and more preferably at 700 to 1000°C in the last step. A more favorable colored pearly pigment can be obtained since a part or the whole part of the component becomes like blended at the interface of titanium oxide layer and titanium composite oxide layer due to calcination.

The following is the embodiment of the present invention as explained by the drawing.

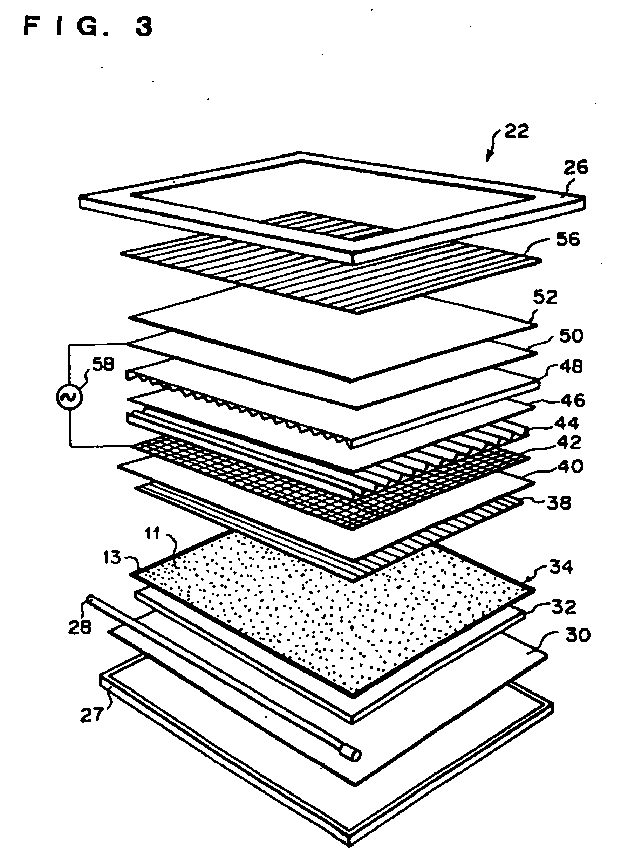

Fig. 3 shows a general constitution of the liquid crystal display which uses the diffusing film in accordance with the embodiment of the present invention.

A liquid crystal module 22 shown in Fig. 3 comprises a case 27, a bezel 26 which is a frame of LCD panel, a light source 28, a reflective film 30, a light guiding plate 32, a diffusing film 34, a polarizing film 38, a glass base 40, a transparent electrode 42, an alignment layer 44, a liquid crystal layer 46, an alignment layer 48, a transparent electrode 50, a glass base 52, and a polarizing film 56.

The light source 28 irradiates a light flux.

As for the light source 28, cold-cathode fluorescent lamp, hot-cathode fluorescent lamp, EL (electroluminescence), LED (light emitting diode), incandescence lamp, and the like can be used.

The light guiding plate 32 irradiates the light flux from the light source 28 on the diffusing film 34.

As for the light guiding plate 32, the plate that the ink in which white pigment was added to scatter light or transparent beads was printed in dot on the surface of the base which is composed of acrylic resin, can be used.

The reflective film 30 irradiates to the light guiding plate 32 by reflecting the light flux from the light source 28.

As for the reflective film 30, deposited metal film, polishing metal plate, expanded polyester, and the like or the film that the pearly pigment exists very closely can be used.

The diffusing film 34 diffuses light flux from the light guiding plate 32 randomly.

As for the diffusing film 34, the colored pearly pigment 11 which is coated with titanium dioxide on the surface of mica and which is further coated with a titanium composite oxide layer on the surface of titanium dioxide, exists on the transparent base in uniform dispersion.

In the present invention, reflected interference light of the desired color can be easily obtained by changing properly the layer thickness of the total titanium oxide which is coated on the surface of mica of the colored pearly pigment.

The polarizing film 38 is fixed on the bottom of the glass base 40 in the drawing and the polarizing film 56 is fixed on the top of the glass base 54 in the drawing by adhesive. Both allow light flux to pass through the diffusing film 34 in prescribed vibration direction of the light.

The transparent electrode 42 and 50 are composed of ITO film which is mainly composed of indium oxide and are patterned according to its object.

The transparent electrode 42 is located on the top of the glass base 40 in the drawing and the transparent electrode 50 is located on the bottom of the glass base 52 in the drawing, respectively.

Orientation of a liquid crystal molecular 46 between the alignment layer 44 and 48 is changed by applying the voltage from the electric source 58 to the transparent electrode 42 and 50.

As for the liquid crystal layer 46, for example, nematic crystal layer is located about 6 μm layer thickness.

To maintain this space regularly, bead-like fine particles (illustration is not shown) composed of silicon dioxide are used as spacing material.

The liquid crystal display module of the present invention is outlined as described above.

In this display module, it is possible to display both internal light and external light in the case where a semitransmission diffusing film is used. The function of the diffusing film of the present invention in each case is explained in the following.

The Case Using Internal Light Source

The diffusing film 34 of the present invention is functioned as the transmission diffusing film in the case where the internal light source is used.

Namely, light flux from the light source 28 irradiates straightly to the light guiding plate 32 located in its forward or irradiates to the light guiding plate 32 through the reflective film 30 located in its backward.

The light flux irradiated in the light guiding plate 32 emits to an almost vertical direction by reflecting at the under surface in the drawing.

The light flux passed through the light guiding plate 32 irradiates the diffusing film 34 which is located in its forward. The light flux passed through the diffusing film 34 is favorably diffused by the colored pearly pigment 11.

The light passed through the diffusing film 34 irradiates the polarizing film 38. The light flux passed through the polarizing film 38 becomes a linear polarizing light which has the prescribed vibration direction.

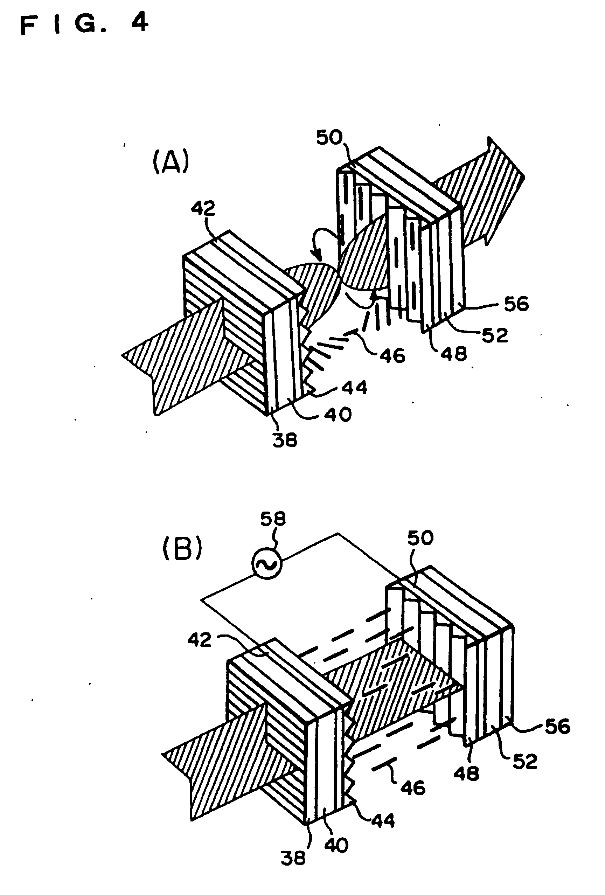

As shown in Fig. 4 (A), the liquid crystal molecular 46 is gradually twisted by the notched channel of the alignment layer 44 and 48 in the case where voltage is not applied.

In here, the portion of the light flux displays colors for the user (e.g., blue, when the colored pearly pigment of the present invention which can be obtained blue transmitted light was used) since the light flux passes through the polarizing film 56 which change its direction along with a twist of the liquid crystal molecular 46.

On the other hand, the liquid crystal molecular 46 is oriented to the major axis direction as shown in Fig. 4 (B) in the case where voltage is applied to the transparent electrocode 42 and 50 located in the forward and backward of the alignment layer 44 and 48, respectively, by the electric source 58.

In this case, the light flux is shielded by the polarizing film 56 located on its forward and the shielded portion of the light flux appears black for the user, since the vibration direction of the light flux passes through the liquid crystal layer 46 is not changed.

The Case Using External Light Source

The diffusing film 34 of the present invention is functioned as the reflective diffusing film in the case where the external light source is used.

Namely, the light entered from the external light source (forward) is diffused and reflected at the diffusing film 34. After the external light irradiates the polarizing film 38, the liquid crystal display can be shown as if the internal light source is used.

Also, the color tone of the interference light which was diffused and reflected at this time can be adjusted to the desired color tone by properly changing the layer thickness of total titanium oxide of the colored pearly pigment used in the diffusing film 34.

As described above, the diffusing film 34 of the present invention can obtain brighter and more beautiful mono-colored display and can give excellent design, because the diffusing particle comprising the colored pearly pigment coated titanium composite oxide or titanium dioxide and titanium composite oxide on the surface of mica exists in uniform dispersion and the color tone of the diffused light is toned by the color tone of titanium composite oxide.

Also, in the colored pearly pigment, green transmitted light can be obtained in the case where the metals of the titanium composite oxide are titanium, lithium, and cobalt.

Also, in the colored pearly pigment, blue transmitted light can be obtained in the case where the metals of the titanium composite oxide are titanium, lithium, and cobalt.

Also, in the colored pearly pigment, yellow transmitted light can be obtained in the case where the metals of the titanium composite oxide were titanium and nickel.

Also, in the colored pearly pigment, red transmitted light can be obtained in the case where the metals of the titanium composite oxide are iron, and nickel as the metals of the titanium composite oxide.

Also, in the pearly pigment which can obtain red transmitted light, more favorable red transmitted light can be obtained when titanium dioxide is further coated on the most external layer of the pearly pigment.

Also, the light was favorably diffused when the amount of the colored pearly pigment is 1 wt% or more.

Also, reflected interference light of the desired color can be easily obtained by changing properly the layer thickness of the total titanium oxide which is coated on the surface of mica of the colored pearly pigment in present invention.

Although the semitransmission diffusing film was explained above, when the transmission diffusing film replace the above-mentioned semitransmission diffusing film, the liquid crystal display is mainly used in conjunction with an internal light source. Also, the liquid crystal display is mainly used in conjunction with the external light source in the case where the reflective diffusing film is used.

Also, reflected interference light of the desired color can be easily obtained by changing properly the layer thickness of the total titanium oxide which is coated on the surface of mica of the colored pearly pigment.

Also, the diffusing film of the present invention can be used for TN type liquid crystal display, STN type display, DSTN type display, F-STN type display, CSH type display, ferroelectric liquid crystal type display, and the like.

Also, as for the diffusing film, the film which is coated with the colored pearly pigment of the present invention was dispersed into polymer on the sheet of basic material or was further attached to the transparent base, and the like can be used.

As for the sheet of the basic material and transparent base, glass, polyacrylic film (plate), polycarbonate film (plate), polyester film (plate), and the like can be used.

As for the polymer, nitrocellulose, acrylic polymer, polycarbonate, polyester, polyurethane, and the like can be used.

Also, the semitransmissive diffusing film, reflective diffusing film, and transmissive diffusing film can be separately manufactured by using the sheet of the above-mentioned basic material separately. Namely, transparent sheet, semitransparent sheet, and white sheet are used in the semitransmissive diffusing film and the transmissive diffusing film. In the reflective diffusing film, transparent sheet, semitransparent sheet, white sheet, and metal plate can be used.

As for the layer thickness of the polymer, the polymer which has layer thickness of 10 to 500 $\mu$m can be used.

In the present embodiment, 1 to 50 wt% of other diffusing particles can be added to the pearly pigment in order to tone the color tone. As for the diffusing particles, white pigment and other pearly pigments can be used.

As for the white pigment, mica coated titanium dioxide of white, barium sulfate, zinc oxide, magnesium oxide, and the like can be used.

As for the pearly pigment, mica coated titanium dioxide which is coated titanium dioxide on the surface of scaly mica, fish scale guanine, basic lead carbonate, bismuth trichloride, and the like can be used.

As for other diffusing particles, silica (glass bead), mica (natural/synthetic), and resin beads such as acrylic resin bead, stylene resin bead, silicone resin bead, and the like can be used.

As for the titanium composite oxides which are coated on titanium dioxide coated mica, the composite oxide of titanium and one or more of metals which is selected from sodium, potassium, rubidium, magnesium, calcium, strontium, barium, zinc, aluminium, silver, tin, cesium, cerium, copper, lead, neodymium, bismuth, manganese, iron, lanthanum, cobalt, nickel, lithium, and chromium are listed as examples.

The following are the preferable working examples of the present invention. Please note that the present invention is not limited to these examples.


Manufacturing Example of the Diffusing Film

The following is a manufacturing example of the diffusing film which dispersed the diffused particle comprising the above-mentioned pearly pigments.

In the following working examples and comparative examples, the pearly pigments with the compositions shown below were applied to a transparent polyethylene terephthalate sheet by using an applicator. The pearly pigment coating sheet of 30 $\mu$m thickness was obtained by drying the sheet for 5 minutes at 100°C. The compositions of the pearly pigments are as determined in TABLE 1 and TABLE 3. However, every sheet of basic material is polyethylene terephthalate. Transparent sheet was used in the semitransmission diffusing film and the transmission diffusing film, and white sheet was used in the reflective diffusing film.


〈Pearly pigment paint〉

| Pearly pigment | 40 parts (or 11 parts) |
| Acrylic lacquer (manufactured by Soken Chemical & Engineering co., ltd. ; TM-150) | 80 parts |
| Toluene | 40 parts |
| Methyl ethyl ketone | 40 parts |


Comparison of the Present Invention and Prior Art (Semitransmissive diffusing film)

The compositions of the pearly pigments of the semitransmissive diffusing film in accordance with the present invention and prior art and the color tone of the diffusing film using the pearly pigment are shown in the following. In the liquid crystal display, transmission color tone shows the color of the non-display portion in the case where an internal light source was used. The reflective color tone shows the color of the non-display portion in the case where an external light source was used. Also, the color shown in the pearly pigment of the present invention shows transmitted light. Also, the interference color shown in titanated mica shows reflected interference light and transmitted light comes to its complementary. Manufacturing examples are shown in the following.

TABLE 1

| | Pearly pigment | Compounding Amount | Transmission Color tone | Reflective Color tone |
|---|---|---|---|---|
| Example 1 | Titanium dioxide ( white reflected interference color) | 35 parts | Green | White |
| | Green pearly pigment (Manufacturing example 1) | 5 parts | | |
| Example 2 | Titanated mica (yellow reflected interference color) | 35 parts | Blue | Yellow |
| | Blue pearly pigment (Manufacturing example 3) | 5 parts | | |
| Example 3 | Titanated mica (blue reflected interference color) | 35 parts | Yellow | Blue |
| | Yellow pearly pigment (Manufacturing example 4) | 5 parts | | |
| Example 4 | Titanated mica (blue reflected interference color) | 35 parts | Red | Blue |
| | Red pearly pigment (Manufacturing example 23) | 5 parts | | |
| Comparative Example 1 | Titanium dioxide (white reflected interference color) | 40 parts | Pale yellow | White |
| Comparative Example 2 | Titanated mica (yellow reflected interference color) | 40 parts | Pale blue | Pale yellow |
| Comparative Example 3 | Titanated mica (blue reflected interference color) | 40 parts | Pale yellow | Pale blue |
| Comparative Example 4 | Acrylic bead | 40 parts | White | White |

Performance Test of the Diffusing Film

Next, performance test of the semitransmissive diffusing film in the above-mentioned table was performed.

The performance of the diffusing film in accordance with the present invention was measured based on the three items shown in the following. As for the measurement of diffuse transmittance and diffuse reflectance, the transmitted light or reflected light to white incident light with using a spectrophotometer (Hitachi U-3410). As for the measurement of haze, illuminant C was used as incident light.

(1) Diffuse transmittance: Percentage of the diffuse transmitted light to the incident light (E). Total transmitted light (T1) comprising the diffuse light with fitting integrating sphere and transmitted light (T2) which is at the same direction as the incident light which was measured without fitting integrating sphere were measured. Then, it was calculated as, diffuse transmittance = (T1-T2)/E .

(2) Diffuse reflectance : Percentage of the diffuse reflected light to the incident light (E). Total reflected light (R1) comprising the diffused light with fitting integrating sphere and reflected light (R2) which is at the same direction as the incident light which was measured without fitting integrating sphere were measured. Then, it was calculated as, diffuse reflectance = (R1-R2)/E .

(3) Haze : Percentage of the diffuse transmitted light to the total transmitted light (T1). Total transmitted light (T1) comprising the diffused light with fitting integrating sphere and transmitted light (T2) which is at the same direction as incident light which was measured without fitting integrating sphere were measured. Then, it was calculated as, haze = (T1- T2)/T1 .

The test results of the diffused film of the above-mentioned table are shown in the following.

TABLE 2

|  | Diffuse transmittance (%) | Diffuse reflectance (%) | Haze (%) |
|---|---|---|---|
| Example 1 | 20 | 70 | 70 |
| Example 2 | 20 | 70 | 70 |
| Example 3 | 20 | 70 | 70 |
| Example 4 | 20 | 70 | 70 |
| Comp. Example 1 | 25 | 70 | 65 |
| Comp. Example 2 | 25 | 70 | 65 |
| Comp. Example 3 | 25 | 70 | 65 |
| Comp. Example 4 | 40 | 30 | 50 |

As is clear from the above result, in the semitransmissive diffusing films of the present invention(Examples 1 to 4), haze was high and the diffused performance of the transmitted light was favorable, as compared to the semitransmissive diffusing films of the prior art(Comparative examples 1 to 4). Accordingly, the diffusing film of the present invention can obtain the much vivider color tone and can give an excellent design.

Comparison of the Present Invention and Prior Art
(Reflective Diffusing Film and Transmissive Diffusing Film)

A comparison between the reflective diffusing films and the transmissive diffusing films in accordance with the present invention and the various diffusing films of the prior art is shown in the following. As for the color tone, reflective color tone was shown in the reflective diffusing film and transmission color tone was shown in the transmissive diffusing film.

TABLE 3

|  | Classification | Pearly pigment | Amount | Color tone |
|---|---|---|---|---|
| Example 5 | Reflective type | Titanated mica (yellow reflected interference color) | 35 parts | Yellow |
|  |  | Blue pearly pigment (Manufacturing example 3) | 5 parts |  |
| Comparative Example 5 |  | Titanium dioxide (white reflected interference color) | 40 parts | White |
| Comparative Example 6 |  | Titanated mica (yellow reflected interference color) | 40 parts | Pale yellow |

TABLE 3 (continued)

| | Classification | Pearly pigment | Amount | Color tone |
|---|---|---|---|---|
| Example 6 | Transmissive type | Titanated mica (yellow reflected interference color) | 10 parts | Blue |
| | | Blue pearly pigment (Manufacturing example 3) | 1 part | |
| Comparative Example 7 | | Titanium dioxide (white reflected interference color) | 11 parts | Pale yellow |
| Comparative Example 8 | | Titanated mica (yellow reflected interference color) | 11 parts | Pale blue |

The results of the diffusing film performance test in the above-mentioned table are shown in the following. The test method is the same as the one stated above.

TABLE 4

| | Classification | Diffuse transmittance (%) | Diffuse reflectance (%) | Haze (%) |
|---|---|---|---|---|
| Example 5 | Reflective type | 10 | 75 | - |
| Comp. Example 5 | | 10 | 65 | - |
| Comp. Example 6 | | 10 | 65 | - |
| Example 6 | Transmission type | 70 | 20 | 80 |
| Comp. Example 7 | | 60 | 20 | 75 |
| Comp. Example 8 | | 60 | 20 | 75 |

As is clear from the results shown in the above-mentioned table, in the reflective diffusing film (Example 5) of the present invention, a favorable diffusing film which has large diffused reflectance and the much stronger reflected interference light can be obtained as compared to the comparative examples 5 and 6, primarily because the colored pearly pigment coated with titanium dioxide and titanium composite oxide was compounded to the diffused film. Accordingly, in the liquid crystal display, the diffusing film of the present invention can display more vividly and give an excellent design.

Also, in the transmissive diffusing film (Example 6) of the present invention, a much vivider transmitted light can be obtained as compared to the comparative examples 7 and 8, because the diffused transmittance was large and the haze which represents the diffusibility of the light was also large. Accordingly, in the liquid crystal display, the diffusing film of the present invention can display with more vividly and can give an excellent.

Next, the diffusing films which comprised the colored pearly pigments of Examples 1 to 4 were irradiated from the coating side by a low-pressure mercury vapor lamp (200W) for 500 hours. After irradiation, the spectrum of each transmitted light was measured.

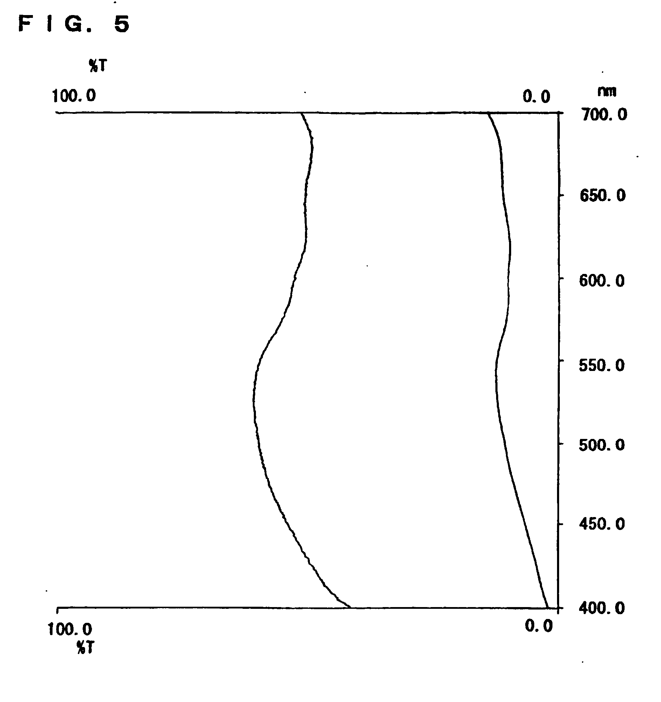

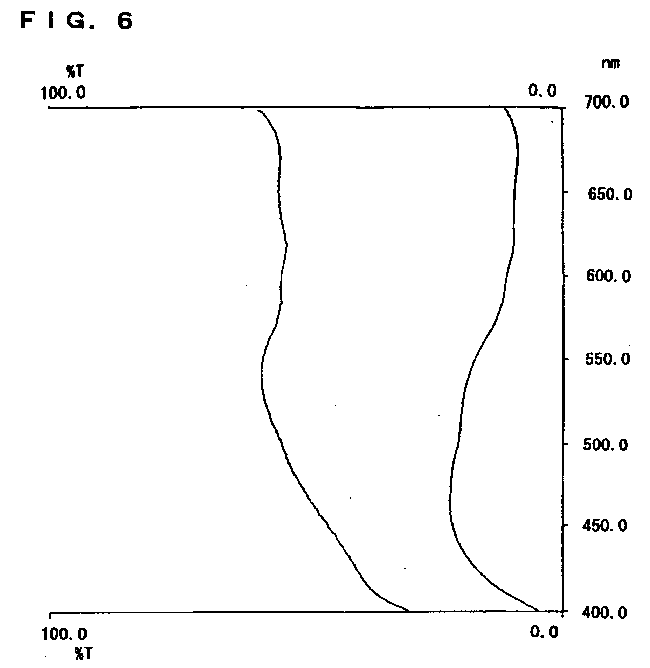

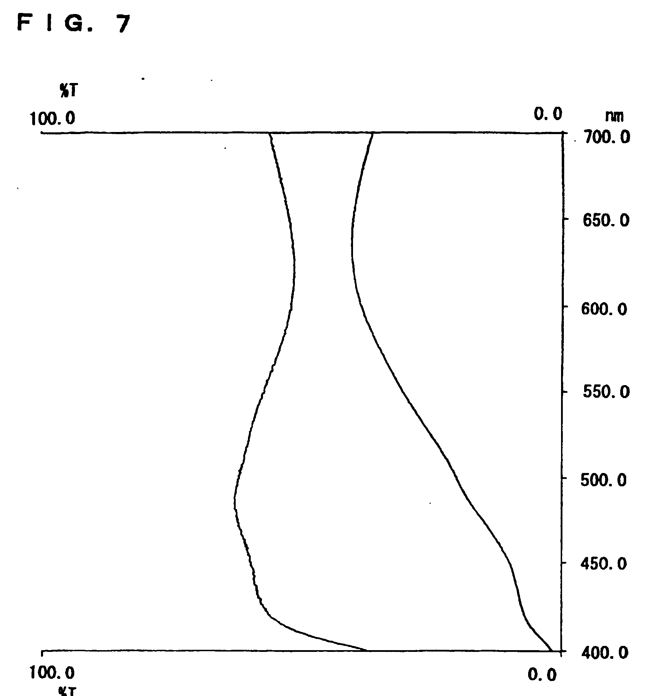

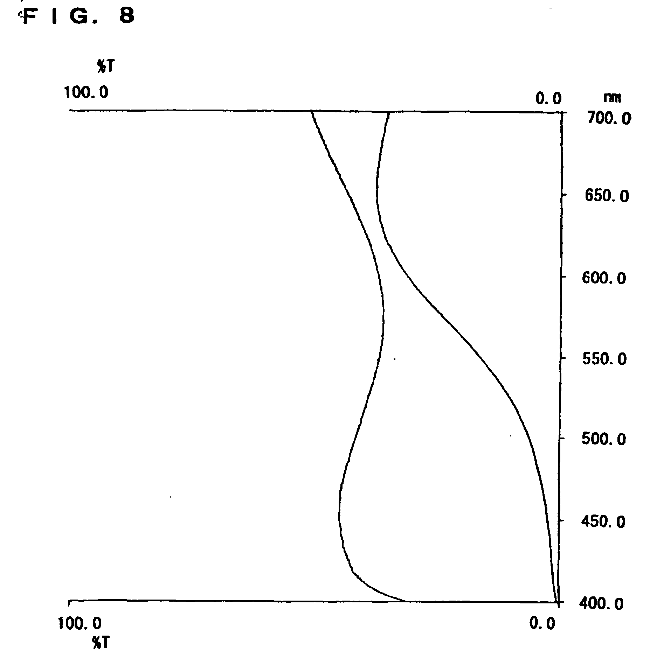

As a result of this, decreases in transmittance spectrum and reflectance spectrum after irradiation were not observed in the diffusing films comprised the colored pearly pigments of the present invention. The transmittance spectrum and reflectance spectrum of the diffusing films of examples 1 to 4 that measured the time are shown in Fig. 5 to 8, respectively. In each drawing, the left curve represents reflectance spectrum and the right curve represents transmittance spectrum.

Namely, discolor and denaturation of the colored pearly pigments are extremely low in the diffusing films comprising the colored pearly pigments of the examples, even when the diffusing films were irradiated by the light from a low-pressure mercury vapor lamp (200W) for 500 hours.

Manufacturing Example of Titanium Composite Oxide Coated Colored Pearly Pigment

Concrete manufacturing processes of making the colored pearly pigments coated with titanium composite oxide or titanium dioxide and titanium composite oxide used for the diffusing film of the present invention are explained in the following.

Synthesis of Green Pearly Pigment

《Manufacturing Example 1》

50g of mica was added to 500g of ion-exchanged water and the mixture was stirred sufficiently and dispersed uniformly. 312.5g of 40 wt% titanyl sulfate water solution was added to the dispersion and the mixture was stirred and boiled for 3 hours. After cooling, the mixture was filtered and washed with water. 100g of mica coated titanium dioxide (titanated mica) was obtained by drying the mixture at 200°C.

Then, 100g of the obtained titanated mica was added to 200g of ion-exchanged water and the mixture was stirred and dispersed uniformly. 110g of 10% cobalt chloride water solution was added to the dispersion for 3 hours while pH was maintained at 4 to 5 by 1N-caustic soda water solution at 80°C. After filtering and washing the mixture with water, 102g of cobalt oxide hydrate coated titanated mica was obtained by drying at 105°C.

Then, 100g of the obtained cobalt oxide hydrate coated titanated mica and 11.5g of lithium carbonate were mixed by a small-sized crusher. The mixed powder was entered into a magnetism crucible and was calcined for 4 hours at 900°C and 105g of green pearly powder was obtained.

The obtained green pearly powder had a composition which contained 50% of mica, 24.8% of titanium dioxide, and 25.2% of lithium cobalt titanate.

《Manufacturing Example 2》

100g of commercially available titanated mica (percentage of $TiO_2$/mica : 50/50) was dispersed into 0.01 wt% of palladium chloride water solution for 10 minutes. Then, titanated mica was activated by dispersing the dispersion in 0.1 wt% of stannous chloride water solution for 10 minutes.

Then, the activated titanated mica was added to 11.3l of cobalt plating bath containing 21.2g of 0.2M sodium hypophosphite, 66.0l of 0.5M ammonium sulfate, 115.0g of 0.5M sodium tartrate, and 14.5g of 0.05M cobalt sulfate at pH 9.2 adjusted by ammonia water. After dispersing the mixture for 40 minutes, 105g of metal cobalt plating titanated mica was obtained by filtering and drying the dispersion.

Then, 100g of metal cobalt plating titanated mica and 6.72g of lithium hydroxide were mixed by a small-sized crusher. The mixed powder was entered into a porcelain crucible and was calcined for 4 hours at 800°C and 102g of green pearly powder was obtained.

The obtained green pearly powder had a composition which contained 46.3% of mica, 30.0% of titanium dioxide, and 22.9% of lithium cobalt titanate.

Synthesis of Blue Pearly Pigment

《Manufacturing Example 3》

50g of mica was added to 500g of ion-exchanged water and the mixture was stirred sufficiently and dispersed uniformly. 475g of 25% titanium tetrachloride/10% hydrochloric acid water solution and 92g of 10% cobalt chloride water solution were added to the dispersion for 3 hours at pH 2 to 3 by 1N-caustic soda water solution. After filtering and washing with water the dispersion, the dispersion was dried at 105°C.

Then, 5.25g of lithium carbonate was mixed with 100g of the obtained powder by a small-sized crusher. The mixed powder was entered into a porcelain crucible and was calcined for 4 hours at 800°C and 103g of peacock green pearly powder was obtained.

The obtained blue-green pearly powder had a composition which contained 43.5% of mica, 14.3% of titanium dioxide, and 42.1% of lithium cobalt titanate.

Synthesis of Yellow Pearly Pigment

《Manufacturing Example 4》

50g of mica was added to 500g of ion-exchanged water and the mixture was stirred sufficiently and dispersed uniformly. 250ml of 2M titanyl sulfate water solution was added to the dispersion and the mixture was boiled for 3 hours while stirring and heating. After cooling, the mixture was filtered and washed with water. 87g of mica coated titanium dioxide (titanated mica) was obtained by drying the mixture at 200°C.

Then, 50g of the obtained titanated mica was added to 200ml of ion-exchanged water and the mixture was stirred and dispersed uniformly. 165ml of 0.42M nickel (II) chloride water solution was added to the dispersion for 3 hours at pH 4 to 5 by 1N- caustic soda water solution at 80°C. After filtering and washing the dispersion with water, 53g of nickel oxide hydrate coated titanated mica was obtained by drying the dispersion at 105°C.

Then, 50g of the obtained nickel oxide hydrate coated titanated mica was entered into a porcelain crucible and calcined for 4 hours at 880°C and 47.2g of gloss powder which had yellow with a dash of green appearance color and yellow interference color was obtained.

The appearance color of the obtained powder was measured by Minolta CM- 1000. Hue (H), value (V)/chroma (C) in Munsell color system was 9.3Y, 8.8/3.5, respectively.

Also, in the case where the obtained powder was analyzed by X-ray diffractometry (Cu-Kα ray, using JRX-12VA manufactured by JEOL Ltd.), it was appreciated that titanium and nickel formed nickel titanium oxide $NiTiO_3$, which is composite metal oxide and coated scaly powder.

Next, in the case where the percentage composition of the powder was found by measuring the intensity ratio of X-ray diffraction diagram, the percentages of mica, titanium dioxide, nickel titanium oxide were 50.8 wt%, 24.5 wt%, and 20.2 wt%, respectively. Accordingly, the percentages of titanium and nickel in the composite metal oxide (nickel titanium oxide in this case) were 44.9 wt% of titanium and 55.1 wt% of nickel with respect to the whole amount of the composite metal oxide.

〈Manufacturing Example 5〉

50g of mica was added to 500g of ion-exchanged water and the mixture was stirred sufficiently and dispersed uniformly. 380ml of 2M titanyl sulfate water solution was added to the dispersion and the mixture was boiled for 3 hours with stirring and heating. After cooling the mixture, the mixture was filtered and washed with water. 103g of mica coated titanium dioxide (titanated mica) was obtained by drying the mixture at 150°C.

Then, 50g of the obtained titanated mica was added to 200ml of ion-exchanged water and the mixture was stirred and dispersed uniformly. A mixture of 165ml of 0.4.2M nickel (II) chloride hexahydrate water solution and 23ml of 0.45M tin chloride (II) dihydrate water solution was added to the obtained dispersion for 3 hours at pH 4 to 5 adjusted by 1N-caustic soda water solution at 80°C. After filtering and washing the mixture with water, 53.7g of nickel oxide hydrate and tin oxide hydrate coated titanated mica was obtained by drying the mixture at 105°C.

Then, 50g of the obtained nickel oxide hydrate and tin oxide hydrate coated titanated mica was entered into a porcelain crucible and was calcined for 4 hours at 880°C and the pearly powder which was yellow with a dash of green appearance color and had green interference color and the glitter.

The appearance color of the obtained powder was measured by Minolta CM- 1000. Hue (H), value (V)/chroma (C) in Munsell color system was 8.4Y, 8.6/4.5, respectively.

In the case where the obtained powder was analyzed by X-ray diffractometry as the way of manufacturing example 4, diffraction peak of the composite metal oxide of titanium, nickel and tin which was neither titanic oxide, nickel oxide, nor tin oxide was observed in the X-ray diffraction diagram.

Also, the percentage composition of the powder and various metals in the composite metal oxide of manufacturing example 5 was calculated by the following. Namely, 16g of muscovite which is commercially available was dispersed into 500ml of water. Then, 100ml, 50ml, 25ml, and 12.5ml of 2M titanyl sulfate water solution were added to the dispersion in each level, respectively, and the mixture was refluxed for 4 hours while stirring at 98°C. After washing with water, filtering and drying, a small amount of the obtained powder which contained titanium dioxide was calcined for 1hour at 900°C. The amount of titanium oxide in this calcined powder is determined by an X-ray fluorescence analysis method.

The determination of the amounts of titanium dioxide and mica in various powders was conducted by measuring the X-ray diffraction (Cu-kα ray). The amount of the composite metal oxide in the powder of manufacturing example 5 was obtained by subtracting the amount of titanium oxide and mica which was determined by the method stated above from the whole amount of the powder.

Accordingly, the difference between the amount of titanium dioxide in titanated mica used as raw material and the amount of titanium oxide in the powder which was obtained in manufacturing example 5 was determined as the amount of titanium oxide for making composite metal oxide. Also, the amounts of nickel and tin in the powder which were obtained in manufacturing example 5 were determined using fluorescent X-ray. The percentage of various metals in the composite metal oxide of the powder obtained by manufacturing example 5 were calculated based on these values.

As a result of this, the percentage composition of the powder in manufacturing example 5 was 39.77 wt% of mica, 34.58 wt% of titanium dioxide, and 25.65 wt% of the composite metal oxide of titanium, nickel, and tin. The percentages of titanium, nickel, and tin with respect to the whole amount of metals in the composite metal oxide were 47.3 wt%, 40.5 wt% and 12.2 wt%, respectively.

〈Manufacturing Example 6〉

50g of titanated mica which was obtained in manufacturing example 4 was added to 500ml of ion-exchanged water and the mixture was stirred sufficiently and dispersed uniformly. 280ml of 0.42M nickel (II) chloride hexahydrate water solution was added to the dispersion for 3 hours at pH 4 to 5 by 1N-caustic soda water solution at 80°C. After cooling the mixture, the mixture was filtered and washed with water. 54.8g of nickel oxide hydrate and tin oxide hydrate coated titanated mica was obtained by drying the mixture at 105°C.

Then, the obtained nickel oxide hydrate and tin oxide hydrate coated titanated mica and 2.75g of potassium chloride were mixed uniformly by a small-sized mixer and the mixture was entered into a porcelain crucible. 51.2g of the gloss powder which has bright yellow appearance color and yellow interference color was obtained after calcining the mixture for 3 hours at 900°C.

The appearance color of the obtained powder was measured by Minolta CM-1000. Hue (H), value (V)/chroma (C) in Munsell color system was 0.2GY, 8.5/5.6, respectively.

In the case where the obtained powder in manufacturing example 6 was analyzed by X-ray diffractometry the same way as in manufacturing example 4, a diffraction peak of the composite metal oxide of titanium, nickel and potassium, which was neither titanic oxide, nickel oxide nor tin oxide, was observed in X-ray diffraction diagram.

Also, the composition percentages of the powder of manufacturing example 6 and various metals of the composite metal oxide were calculated as the same way as in manufacturing example 5. The percentages of the composition of the powder were 50.6 wt% of mica, 31.6 wt% of titanium dioxide, and 17.8 wt% of the composite metal oxide of titanium, nickel, and potassium. The percentages of titanium, nickel, and potassium with respect to the whole amount of metals in the composite metal oxide were 43.2 wt%, 40.1 wt%, and 16.7 wt%, respectively.

Effects by Kinds and Percentages of Metals

Scaly powder which was coated with the composite metal oxide that the percentages of titanium and nickel in the composite metal oxide were different was manufactured by changing the concentration of nickel chloride water solution in manufacturing example 4. The appearance color of the obtained powder was measured by naked eye and Minolta CM-1000. Also, the glossiness of the powder was measured by the following. Namely, 1g of various powders was taken to 15ml of nitrocellulose lacquer as a sample, and the sample was applied on a white paper using an applicator with 0.101mm clearance. After drying this paper, the colorimetry of the sample was measured by a goniospectrophotometer (GCMS-3, manufactured by Murakami Color Lab) under the conditions where 45° of the incident light angle/45° of the light receiving angle with direct reflection direction. The obtained Y value was regarded as glossiness. The results are shown in TABLE 5.

| TABLE 5 | | | | |
|---------|---|---|---|---|
| Weight ratio (Ti/Ni) | Appearance (Naked eye observation) | Color tone | | Glossiness (Y value) |
| | | H | V/C | |
| 30/70 | Dim yellow powder | 1.8GY | 7.9/4.4 | 609.93 |
| 45/55 | Yellow weak-glossy powder | 0.5GY | 8.3/3.9 | 649.47 |
| 55/45 | Bright yellow weak-glossy powder | 1.5GY | 8.6/4.9 | 743.32 |
| 70/30 | Bright yellow glossy powder | 0.8GY | 8.5/4.1 | 878.84 |
| 85/15 | Bright yellow glossy powder | 0.6GY | 8.7/4.5 | 912.07 |
| 90/10 | Pale yellow high-glossy powder | 7.9Y | 8.5/2.0 | 1220.77 |
| 95/5 | Nearly white high-glossy powder | 9.3Y | 8.2/2.5 | 1151.47 |

As shown in TABLE 3, when the percentage of titanium in the scaly powder was less than 45 wt%, and when titanium and nickel were the only metals contained in the composite metal oxide that coated the scaly powder, the chroma of the powder was low and the powder became dim yellow. Also, when the percentage of titanium was over 90 wt%, the yellow color development was almost not observed and the powder became nearly white. Therefore, it is preferable that the composite metal oxide of the powder contains 45 to 90 wt% of titanium and 10 to 55 wt% of nickel, and more preferably, 55 to 85 wt% of titanium and 15 to 45 wt% of nickel, with respect to the whole amount of metals in the composite metal oxide.

Also, the glossiness of the powder was changed according to percentages of titanium and nickel. Various glossy powders, ranging from weak glossy to high glossy powder, can be obtained by changing the percentages of titanium and nickel in the composite metal oxide.

Yellow scaly powders which had various percentages of titanium, nickel and tin in the composite metal oxide according to the process of manufacturing example 5 were prepared. When the inventors examined the appearance color and color tone of these powders by naked eye, the chroma of the powder was extremely low in the case where the percentage of titanium was less than 45 wt%. Also, the yellow color development of yellow was hardly observed in the case where the percentage of titanium was over 90 wt%. Also, in the case where the percentage of tin, the third metal ingredient, was 1 wt% or more, the appearance color with a dash of green was observed by naked eye and the chroma of the powder became high. However, the color tone and glossiness became conversely poor in the case where 25 wt% or more of tin was compounded.

The result of this study indicated that in the case where a third metal ingredient was contained in the composite metal oxide, the obtained powder displayed better appearance color and color tone when titanium, nickel, and the third metal ingredient were within the ranges of 45 to 90 wt% of titanium, 9 to 30 wt% of nickel, and 1 to 25 wt% of the third metal ingredient, and more preferably, 50 to 80 wt% of titanium, 12 to 26 wt% of nickel, and 8 to 24 wt% of the third metal ingredient, with respect to the whole amount of metals in the composite metal oxide.

〈Manufacturing Examples 7 to 17〉

20g of titanated mica pigments (Iriodin manufactured by Merck AG) which have various interference colors and which are commercially available were added to 200ml of ion-exchanged water and the mixture was stirred and dispersed uniformly. 70ml of 10% nickel (II) chloride water solution was added to the dispersion for 3 hours and maintained at pH 4 to 5 by 1N-caustic soda water solution at 80°C. After cooling, the mixture was filtered and washed with water. 25g of nickel oxide hydrate coated titanated mica was obtained by drying the mixture at 105°C.

Then, 5g of the carbonates of zinc, tubidium, barium, scandium, sodium, bismuth, magnesium, aluminium, cerium, neodymium, and strontium were separately mixed with respect to 10g of the obtained nickel oxide hydrate coated titanated mica using a small-sized mixer. Yellow scaly powders which had various color tone were obtained by calcining the mixture for 3 hours at 800°C in atmosphere.

The appearance color (naked-eye observation) and color tone (measured by using Minolta CM-1000) of these yellow scaly powders obtained by manufacturing example 7 to 17 were shown in TABLE 6.

TABLE 6

| Mfg. Ex No. | Raw materials* | Type of metal composed oxide | Color tone of the obtained yellow scaly powders | | |
|---|---|---|---|---|---|
| | | | Appearance | H | V/C |
| Mfg. Ex. 7 | A | Ti-Ni-Zn | Yellow with green glossy powder | 9.2Y | 8.5/4.1 |
| Mfg. Ex. 8 | B | Ti-Ni-Rb | Yellow glossy powder | 9.4Y | 8.8/4.3 |
| Mfg. Ex. 9 | B | Ti-Ni-Ba | Yellow glossy powder | 10Y | 8.6/4.9 |
| Mfg. Ex. 10 | B | Ti-Ni-Ce | Yellow glossy powder | 8.5Y | 8.4/5.1 |
| Mfg. Ex. 11 | C | Ti-Ni-Na | Yellow with red glossy powder | 6.6Y | 7.7/5.1 |
| Mfg. Ex. 12 | C | Ti-Ni-Bi-Al | Yellow with red glossy powder | 6.6Y | 8.7/4.6 |
| Mfg. Ex. 13 | B | Ti-Ni-Mg-Zn | Yellow weak glossy powder | 9.4Y | 8.9/4.3 |
| Mfg. Ex. 14 | A | Ti-Ni-Al | Yellow with green glossy powder | 4.2GY | 8.8/4.1 |
| Mfg. Ex. 15 | B | Ti-Ni-Ce-Mg | Yellow glossy powder | 9.6Y | 8.7/4.9 |
| Mfg. Ex. 16 | B | Ti-Ni-Nd | Yellow weak glossy powder | 7.6Y | 7.9/4.2 |
| Mfg. Ex. 17 | C | Ti-Ni-Sr | Yellow with red glossy powder | 7.9Y | 8.7/4.4 |
| Iriodin 235 | - | Ti | White with green glossy powder | 5.6G | 5.5/3.0 |
| Iriodin 205 | - | Ti | White with yellow glossy powder | 5.4Y | 5.8/3.1 |
| Iriodin 217 | - | Ti | White with red glossy powder | 2.2R | 4.6/3.6 |

\* :
A... Iriodin 235 (titanated mica which has green interference color)
B... Iriodin 205 (titanated mica which has yellow interference color)
C... Iriodin 217 (titanated mica which has red interference color)

As shown in TABLE 6, a commercially available titanated mica demonstrated various interference colors such as yellow, red, or green. However, the appearance color of this titanated mica was basically white with no bright yellow appearance color.

On the contrary, all powders in manufacturing examples 7 to 17 which were coated with composite metal oxides containing titanium, nickel and a third metal ingredient. These powders displayed bright yellow appearance color with high value and chroma. These powders also had the interference color of the titanated mica which was used as raw material and sometimes displayed dichromatic property. Also, the powders which had various glossiness were obtained according to their metal ingredients.

〈Manufacturing Example 18〉

10g of titanated mica Iriodin 231(green interference color) which was manufactured by Merck AG of Germany, was uniformly mixed with 3.4g of nickel carbonate and 1.4g of zinc carbonate by a small-sized mixer and the mixture was entered into a porcelain crucible. Then, 10.08g of the powder with bright yellow appearance and a dash of green and which has green interference color and weak brightness was obtained by calcining the mixture for 2 hours at 900°C using an electric oven in atmosphere.

〈Manufacturing Example 19〉

10g of the titanated mica obtained from manufacturing example 4 was uniformly mixed with 2.003g of nickel carbonate and 1.10g of potassium carbonate by a small- sized mixer and the mixture was entered into a porcelain crucible. Then, 10.21g of the glossy powder with yellow appearance and yellow interference color was obtained by calcining the mixture for 2 hours at 800°C using an electric oven in atmosphere.

〈Manufacturing Example 20〉

10g of stainless foil with particle sizes distribution of 10 to 70 μm was entered into a board made of quartz and the board was set to central portion of a core pipe of circular electrical oven. Then, a flask which contained 50g of titanium isopropoxide was connected to the one portion of the core pipe and the heat treatment was conducted until titanium isopropoxide in the flask was entirely disappeared while the whole reaction systems which comprised the flask and the core pipe portion, was maintained at 150°C and 1 Torr. After the stainless foil was cooled down, 15.3g of titanium dioxide coated stainless foil was obtained by calcination for 2 hours at 600°C. 10.0g of the obtained titanium dioxide coated stainless foil, 5g of nickel carbonate and 5g of aluminium hydroxide were mixed uniformly in a small-sized mixer and the mixture was entered into a porcelain crucible. After leaving and cooling the mixture, 12.1g of the glossy powder which had pale yellow appearance color was obtained by classifying the obtained powder by levigation.

〈Manufacturing Example 21〉

50g of kaolinite was added to 500g of ion-exchanged water and the mixture was stirred sufficiently and dispersed uniformly. 300ml of 2M titanyl sulfate water solution was added to the obtained dispersion and boiled for 3 hours while stirring. After cooling the mixture, the mixture was filtered and washed with water. 95g of kaolinite coated by titanium dioxide was obtained by drying the mixture at 200°C.
Then, 50g of the obtained titanium dioxide coated kaolinite was added to 200g of ion-exchanged water and the mixture was stirred and dispersed uniformly. 100ml of 10% nickel (II) chloride water solution was added to the dispersion for 3 hours while maintaining pH at 4 to 5 by 1N-caustic soda water solution at 80°C. After the mixture was filtered and washed with water, 55g of nickel oxide hydrate and titanium dioxide coated kaolinite was obtained by drying the mixture at 105°C.
Next, the obtained nickel oxide hydrate and titanium dioxide coated kaolinite were entered into a porcelain crucible. 115g of the powder which had yellow (gold) appearance color was obtained by calcining it for 4 hours at 800°C.
The appearance color (naked-eye observation) and color tone (measured by Minolta CM-1000) of yellow scaly powders obtained by manufacturing examples 18 to 21 were shown in TABLE 7.

TABLE 7

| Mfg. Ex. No. | Type of metals composed oxide | Color tone of the obtained yellow scaly powders | | |
|---|---|---|---|---|
| | | Appearance | H | V/C |
| Mfg. Ex. 18 | Ti-Ni-K | Yellow glossy powder | 0.1GY | 8.9/5.7 |
| Mfg. Ex. 19 | Ti-Ni-Pb | Yellow weak-glossy powder | 7.6Y | 8.6/5.2 |
| Mfg. Ex. 20 | Ti-Ni-Al | Pale yellow glossy powder | 1.2Y | 8.9/3.3 |
| Mfg. Ex. 21 | Ti-Ni | Yellow (Gold) glossy powder | 4.0Y | 3.3/3.8 |

In the case where the obtained yellow scaly powder in manufacturing examples 18 to 21 was analyzed by X-ray diffractometry the same way as in manufacturing example 4, the diffraction peak of the composite metal oxide was observed in the X-ray diffraction diagram. Also, the percentage composition of the powders was found as in manufacturing examples 4 and 5. For example, the powder in manufacturing example 21 contained 52.1 wt% of kaolinite, 27.9 wt% of titanium dioxide, and 20.0 wt% of titanium nickel oxide. The percentages of titanium and nickel in the composite metal oxide were 44.9 wt% of titanium and 55.1 wt% of nickel.

Synthesis of Red Pearly Pigment

〈Manufacturing Example 22〉

50 parts by weight of water was added to 10 parts by weight of titanium dioxide coated mica (particle diameter 12 μm, titanium dioxide coated amount to mica, 138 wt%) and the mixture was stirred and dispersed. 3.36 parts by weight of iron chloride ($FeCl_3 6H_2O$), 4.48 parts by weight of urea, and 50 parts by weight of water were mixed and dissolved. The latter was added to the former and the mixture was reacted for 2 hours with heat while stirring. After the formed iron and titanium oxide coated mica was filtered and washed with water, it was dried for 12 hours at 150°C.

1.34 parts by weight of nickel carbonate/nickel hydroxide hydrate was added and mixed with 10.00 parts by weight of the obtained iron/titanium dioxide coated mica. Then, the composite oxide of titanium, iron, and nickel was formed by calcining the mixture for 1 hour at 700°C. After calcination, red titanated mica pigment was obtained by grinding the composite oxide.

In the obtained composite oxide coated mica, composite oxide coated amount with respect to mica was 183 wt%. The percentages metals which composed the composite oxide were 71.60 wt% of titanium, 14.20 wt% of iron, and 14.20 wt% of nickel.

Color Tone of Composite Oxide and Color Tone of Composite Oxide Coated Mica

Next, the present inventors studied the differences of color tone between the composite oxide and composite oxide coated mica.

A comparison of the color tone was conducted using the specimens shown in TABLE 8. These specimens were applied to a black paper using a doctor blade. After drying the obtained color paper, the specimen for measurement was made by cutting the paper to the size of $20 \times 100$mm. Colorimetry of the specimen was observed by naked-eye and by a goniospectrophotometer (GCMS-3) manufactured by Murakami Color Lab (under the conditions where 45° of the incident light angle and 35 to 65° of the light receiving angle). The thickness of the coating after the specimen for measurement was dried was 0.016mm.

TABLE 8

| Specimen | 15 wt% |
|---|---|
| Nitrocellulose | 10 |
| Butyl CELLOSOLVE | 10 |
| Naphtha | 20 |
| Cyclohexane | 45 |

The results are shown in TABLE 9.

TABLE 9

|  | 35° | | | 65° | | | Color of naked-eye observation |
|---|---|---|---|---|---|---|---|
|  | L | a | b | L | a | b |  |
| Composite oxide | 83.17 | 7.59 | 8.47 | 81.25 | 7.34 | 8.10 | Pink |
| Composite oxide and mica | 89.19 | 6.06 | 7.46 | 73.71 | 7.37 | 7.14 | Pink |
| Composite oxide coated mica | 87.31 | 50.23 | -45.70 | 66.16 | 54.21 | -33.98 | Purple |

As shown in TABLE 9, the composite oxide coated mica displayed a color which was different from that of the composite oxide only, even in the case where the composite and the composite oxide coated mica were having the same metal compositions. The titanated mica pigment of the present invention had a specific color tone which was obtained by coating composite oxide on mica.

Metal Composition of Composite Oxide

Similarly, the present inventors compared the changes of color tone when the composite oxide contained various percentages of titanium, iron, and nickel.

The result is shown in the next Table 10.

TABLE 10

|  | Titanium | Iron | Nickel | L | a | b | Observation color |
|---|---|---|---|---|---|---|---|
| Test Ex. 1 | 92.59 | 4.63 | 2.78 | 36.78 | 21.86 | -6.73 | Red purple |
| 2 | 90.90 | 4.55 | 4.55 | 36.08 | 22.04 | -6.96 | Red purple |
| 3 | 88.50 | 8.85 | 2.65 | 30.45 | 25.07 | -9.24 | Red purple |
| 4 | 86.95 | 8.70 | 4.35 | 29.44 | 24.04 | -10.10 | Red purple |
| 5 | 86.95 | 4.35 | 8.70 | 35.64 | 22.24 | -6.50 | Red purple |
| 6 | 83.34 | 8.33 | 8.33 | 30.19 | 24.92 | -9.45 | Red purple |
| 7 | 81.30 | 16.26 | 2.44 | 25.89 | 20.79 | -14.84 | Blue purple |
| 8 | 80.00 | 16.00 | 4.00 | 25.59 | 20.54 | -14.64 | Blue purple |
| 9 | 80.00 | 4.00 | 16.00 | 35.20 | 20.51 | -6.36 | Red purple |
| 10 | 76.93 | 15.38 | 7.69 | 25.01 | 18.43 | -15.61 | Blue purple |
| 11 | 76.93 | 7.69 | 15.38 | 29.74 | 23.62 | -10.45 | Purple |
| 12 | 71.43 | 14.29 | 14.29 | 25.12 | 15.50 | -15.37 | Blue purple |
| 13 | 68.96 | 3.45 | 27.59 | 34.81 | 9.42 | -5.64 | Low chroma purple |
| 14 | 66.67 | 6.67 | 26.67 | 29.46 | 7.78 | -6.81 | Low chroma purple |
| 15 | 62.50 | 25.00 | 12.50 | 23.38 | 1.28 | -5.12 | Low chroma blue |

As shown in above-mentioned TABLE 10, when the percentage of titanium in the composite oxide was within the range of 60 to 95 %, namely, in test examples 1 to 12, a red or purple color was observed. This color existed in the range of color difference of ab=12.00 with center of a;22.04 and b:-6.96, in the case where the color was displayed by Lab of Hunter. This color tone area was difficult to detect when titanium, iron, or nickel was separately used and was viewed excellent red or red purple.

Further, test example 2 was within the range of Δ ab=9.00 with center of a:20.00 and b:-10.00 in the case where the color tone was displayed by Lab of Hunter and became excellent color tone as red or red purple.

On the other hand, in the case where iron or nickel was over 25 % (test examples 13 to 15), it was difficult to obtain beautiful red or red purple color tone as in test examples 1 to 12, even when the percentage of titanium was 60 % or more.

Synthesis of the Pearly Pigment Further Coated Titanium Dioxide on the Most External Layer of above-mentioned Red Pearly Pigment

〈Manufacturing example 23〉

50 parts by weight of water was added to 10 parts by weight of titanium dioxide coated mica and the mixture was stirred and dispersed. The mixture was then mixed and dissolved in 3.36 parts by weight of iron chloride ($FeCl_3$ $6H_2O$), 4.48 parts by weight of urea, and 50 parts by weight of water and was reacted for 2 hours with heat while stirring. This iron/ titanium dioxide coated mica was filtered and washed with water and was then dried for 12 hours at 150°C (Process 1).

1.34 parts by weight of nickel carbonate/nickel hydroxide hydrate was added to and mixed with 10.00 parts by weight of the obtained iron/titanium dioxide coated mica. Then, the composite oxide of titanium, iron,and nickel was formed by calcining the mixture for 1 hour at 700°C. Red composite oxide coated mica was obtained by grinding the mixture after calcination (Process 2).

Then, 10 parts by weight of the composite oxide coated mica was added to a solution where 19.60 parts by weight of titanium sulfate was dissolved into 100 parts by weight of water. The mixture was reacted for 4 hours with heating up to 100°C while stirring. After the manufactured titanium dioxide hydrate/composite oxide coated mica was filtered and washed with water, titanium dioxide/composite oxide coated mica was obtained by drying for 12 hours at 150°C (Process 3).

Also, in the obtained titanium dioxide/composite oxide coated mica, the percentage of the composite oxide to mica was 184 wt% and the percentage of titanium dioxide to the composite oxide coated mica was 80 wt%. The optical layer thickness of the titanium dioxide/composite oxide layer was about 630nm and the interference color of the titanium dioxide/composite oxide coated mica was green.

Color Tone of Titanium Dioxide/Composite Oxide Coated Mica

Next, the present inventors studied about the specificity of color tone of the colored titanated mica pigment.

A comparison of the color tone was conducted using each the specimens shown in TABLE 11. These specimens were applied to a black paper using a doctor blade. After drying the obtained color paper, the specimen for measurement was cut to the size of 20 × 100mm. Colorimetry of the specimen was observed by naked-eye and by a goniospectrophotometer (GCMS-3) manufactured by Murakami Color Lab (under the conditions where 45° of the incident light angle and 35 to 65° of the light receiving angle). The thickness of the coating after the specimen for measurement was dried was 0.016mm.

TABLE 11

| Sample | 15 wt% |
|---|---|
| Nitrocellulose | 10 |
| Butyl CELLOSOLVE | 10 |
| Naphtha | 20 |
| Cyclohexane | 45 |

The results are shown in TABLE 12.

TABLE 12

| | 45° | | | Observation color | 65° | | | Observation color |
|---|---|---|---|---|---|---|---|---|
| | L | a | b | | L | a | b | |
| ① Composite oxide | 109.71 | 6.33 | 13.53 | Pink | 84.69 | 5.82 | 7.06 | Pink |
| ② Composite oxide coated mica | 208.60 | 28.70 | -9.91 | Purple | 66.16 | 54.21 | -33.98 | Red-purple |
| ③ Composite oxide coated mica | 193.70 | 8.86 | -6.97 | White-green | 74.75 | 19.48 | -23.62 | White-red |
| ④ Titanium oxide/composite oxide coated mica | 204.29 | 3.44 | 8.07 | Green | 67.72 | 9.00 | -14.55 | Red |

The numbers shown in TABLE 12 represent :

① : the composite oxide only which has the same metal percentages as in above-mentioned manufacturing example 23 ;
② : the composite oxide coated mica obtained by Process 2 of ① ;
③ : in above-mentioned manufacturing example 23, the composite oxide which was first coated with total titanium dioxide on mica and then was coated iron and nickel on the mica ;
④ : titanium dioxide/composite oxide coated mica which was obtained by manufacturing example 23.

As shown in TABLE 12, titanium dioxide/composite oxide coated mica displayed a different color as compared to the colors shown in the composite oxide coated mica which was the intermediary and the composite oxide only, respectively, even in the case where the titanium dioxide/composite oxide coated mica, the composite oxide coated mica, and the composite oxide only were all having the same metal compositions. In particular, the color tone flip-flop property was clearly observed in titanium dioxide/composite oxide coated mica. This property was hardly observed in the composite oxide coated mica. Accordingly, a colored titanated mica pigment which shows specific color tone and flip-flop property can be obtained by first coating the composite oxide on mica and then further adding a titanium dioxide layer onto the composite oxide coated mica.

Also, when ③ and ④ are compared, the colored pearly pigment of the present invention using ④ changed from low chroma red through blue, red again, to purple according to observation angle.

Opposite to ④, composite oxide coated mica shown in ③ was made by coating total titanium dioxide on mica first followed by coating iron and nickel on the titanium oxide coated mica. This titanium oxide/composite oxide coated mica displayed a color from yellow through blue to purple. However, according to overlooking, all composite oxides prepared in this procedure were considerably whitish and the degree of discoloration was small.

A possible explanation with regard to the display of whitish color in the composite oxide of ③ is that because the total titanium dioxide has been coated onto mica in advance so that the percentages of iron and nickel are relatively lower and the impact of titanium dioxide (white) is relatively stronger. The composite oxide is composed of total titanium, iron, and nickel.

Coating Amount of Titanium Dioxide

Next, the present inventors changed the coating amounts of titanium dioxide to observe the changes in color tone.

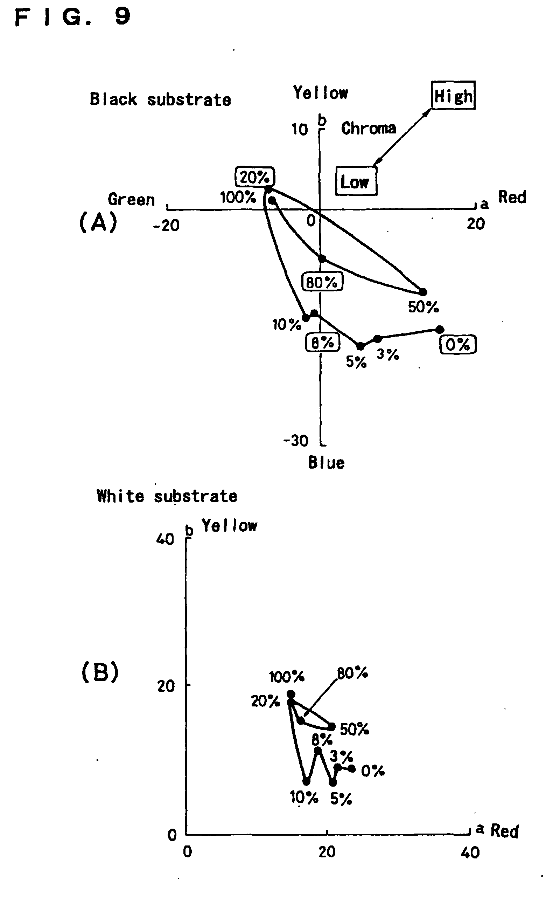

Namely, various samples were applied on a black and a white paper, and the samples were observed. The results were shown in Fig. 9.

As a result of this, although the interference color of titanium dioxide/composite oxide coated mica was purple when the coating amount of titanium dioxide to composite oxide coated mica which was the intermediary was 0wt%, the interference color of titanium dioxide/composite oxide coated mica was changed to blue, green, and low chroma blue when the coating amounts of titanium dioxide were 8%, 20% and 80%, respectively. Also, the color tone of the products coated with 80% of titanium dioxide changed from blue-green to red by changing the angle of the products coated on black paper. The coating amount of titanium dioxide is preferably 3 to 10% and more preferably 8 to 80%, because the color tone becomes whitish when the amount of titanium dioxide is over 100%.

As explained above, according to the diffusing film of the present invention, a brighter and beautiful mono-colored display can be obtained and an excellent design can be provided because the diffusing particle comprised the colored pearly pigment coated with titanium composite oxide or titanium composite oxide and titanium dioxide on the surface of mica. This colored pearly pigment was uniformly dispersed in the diffusing film and the color tone of the diffused light was toned by the color tone of the composite oxide.

Also, in the above-mentioned colored pearly pigment, green transmitted light was obtained in the case where the metals of titanium composite oxide were titanium, lithium, and cobalt.

Also, in the above-mentioned colored pearly pigment, blue transmitted light was obtained in the case where the metals of titanium composite oxide were titanium, lithium, and cobalt.

Also, in the above-mentioned colored pearly pigment, yellow transmitted light was obtained in the case where the metals of titanium composite oxide were titanium and nickel.

Also, in the above-mentioned colored pearly pigment, red transmitted light was obtained in the case where the metals of titanium composite oxide were titanium, iron, and nickel.

Also, in the above-mentioned pearly pigment which can obtain the red transmitted light, more favorable red transmitted light was obtained in the case where titanium dioxide was coated on the most external layer of the pearly pigment.

**Claims**

1. A diffusing film comprising a diffusing particle which comprises a colored pearly pigment, said colored pearly pigment being coated with titanium composite oxide or titanium composite oxide and titanium dioxide on the surface of mica, said colored pearly pigment being uniformly dispersed and having a color tone of a diffusing light as toned by a color tone of said titanium composite oxide.

2. A diffusing film according to claim 1, wherein a color tone of a reflected diffusion light is toned by the color tone of said titanium composite oxide.

3. A diffusing film according to claim 1 or 2, wherein a color tone of a transmitted diffusion light is toned by the color tone of said titanium composite oxide.

4. A diffusing film as in any of claims 1 to 3, wherein said colored pearly pigment has a diameter of about 10 to 300 μm.

5. A diffusing film as in any of claims 1 to 4, wherein a metal coated on said titanium composite oxide comprises titanium, lithium, and cobalt to obtain a green transmitted light.

6. A diffusing film according to claim 5, wherein said colored pearly pigment comprises 41 to 55 wt% of mica, 22 to 33 wt% of titanium dioxide, and 20 to 28 wt% of lithium cobalt titanate.

7. A diffusing film as in any of claims 1 to 4, wherein a metal coated on said titanium composite oxide comprises titanium, lithium, and cobalt to obtain blue transmitted light.

8. A diffusing film according to claim 7, wherein said colored pearly pigment comprises 39 to 48 wt% of mica, 12 to 16 wt% of titanium dioxide, and 37 to 47 wt% of lithium cobalt titanate.

9. A diffusing film as in any of claims 1 to 4, wherein a metal coated on said titanium composite oxide comprises titanium and nickel to obtain yellow transmitted light.

10. A diffusing film according to claim 9, wherein said titanium composite oxide comprises 45 to 90 wt% of titanium and 10 to 55 wt% of nickel with respect to the whole amount of the metals of the titanium composite oxide.

11. A diffusing film according to claim 9 or 10, wherein the metals composed of said titanium composite oxide comprises titanium, nickel, and a third ingredient, said third ingredient is one or more of the metals which is selected from the group consisting of Zn, Rb, K, Ba, Sc, Sn, Na, Bi, Pb, Mg, Al, Ce, Nd, and Sr.

12. A diffusing film according to claim 11, wherein said colored pearly pigment comprises 45 to 90 wt% of titanium, 9 to 30 wt% of nickel, and 1 o 25 wt% of the third ingredient with respect to the whole amount of the metals of the titanium composite oxide.

13. A diffusing film as in any of claims 1 to 4, wherein a metal coated on said titanium composite oxide comprises titanium, iron, and nickel to obtain red transmitted light.

14. A diffusing film according to claim 13, wherein said colored pearly pigment comprises 60 to 95 wt% of titanium, 1 to 24 wt% of iron, and 1 to 24 wt% of nickel with respect to the whole amount of the metals of the titanium composite oxide.

15. A diffusing film according to claim 13 or 14, wherein titanium dioxide is further coated on the titanium composite oxide layer of the colored pearly pigment.

16. A diffusing film as in any of claims 1 to 15, wherein said colored pearly pigment is calcined at 500 to 1200°C.

17. A lighting unit comprising:

a light source which irradiates a light; and
a diffusing film comprising a diffusing particle which comprises a colored pearly pigment which is coated with titanium composite oxide or titanium composite oxide and titanium dioxide on the surface of mica, said colored pearly pigment being uniformly dispersed,
wherein said light from said light source is toned by a color tone of said titanium composite oxide.

18. A liquid crystal display comprising:

a diffusing film which transmits or reflects a light from a light source as a scattered light; and
a liquid crystal panel which controls the light from said diffusing film to transmit or shield by changing a voltage which applies onto a liquid crystal layer,
wherein said diffusing film comprises a diffusing particle which comprises a uniformly dispersed colored pearly pigment which is coated with titanium composite oxide or titanium composite oxide and titanium dioxide on the

surface of mica.

F I G. 1

# F I G. 2

# F I G. 3

# F I G. 4

(A)

(B)

F I G. 5

F I G. 6

# F I G.  7

F I G. 8

# F I G. 9

**Black substrate**

(A)

**White substrate**

(B)

# INTERNATIONAL SEARCH REPORT

| | International application No. |
|---|---|
| | PCT/JP98/00297 |

**A. CLASSIFICATION OF SUBJECT MATTER**
Int.Cl⁶ G02B5/02, G02F1/1335, F21V8/00, G09F9/00, C09C1/40

According to International Patent Classification (IPC) or to both national classification and IPC

**B. FIELDS SEARCHED**

Minimum documentation searched (classification system followed by classification symbols)
Int.Cl⁶ G02B5/02, G02F1/1335, G09F9/00, C09C1/00-3/12

Documentation searched other than minimum documentation to the extent that such documents are included in the fields searched

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y<br>A | JP, 55-103510, A (Nitto Electric Industrial Co., Ltd.),<br>August 7, 1980 (07. 08. 80) (Family: none) | 1-4,17,18<br>5-16 |
| Y<br>A | JP, 7-157688, A (Dainichi Seika Colour & Chemicals Mfg. CO., Ltd.),<br>June 20, 1995 (20. 06. 95) (Family: none) | 1-4,17,18<br>5,6,15 |
| Y<br>A | JP, 7-157686, A (Dainichi Seika Colour & Chemicals Mfg. CO., Ltd.),<br>June 20, 1995 (20. 06. 95) (Family: none) | 1-4,17,18<br>7-15 |
| Y<br>A | JP, 49-128027, A (Merck Patent GmbH.),<br>December 7, 1974 (07. 12. 74),<br>& DE, 2313331, A & BE, 812323, A<br>& DD, 109887, A & FR, 2221501, A<br>& GB, 1438043, A & IL, 44355, A<br>& NL, 7402958, A & US, 3926659, A<br>& ZA, 7401278, A | 1-4,17,18<br>13,14 |

☒ Further documents are listed in the continuation of Box C.   ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| May 26, 1998 (26. 05. 98) | June 9, 1998 (09. 06. 98) |

| Name and mailing address of the ISA/<br>Japanese Patent Office | Authorized officer |
|---|---|
| Facsimile No. | Telephone No. |

Form PCT/ISA/210 (second sheet) (July 1992)

## INTERNATIONAL SEARCH REPORT

International application No.

PCT/JP98/00297

C (Continuation).   DOCUMENTS CONSIDERED TO BE RELEVANT

| Category* | Citation of document, with indication, where appropriate, of the relevant passages | Relevant to claim No. |
|---|---|---|
| Y<br>A | JP, 8-269357, A  (Topy Industries, Ltd.),<br>October 15, 1996 (15. 10. 96)  (Family: none) | 1-4,17,18<br>11,12 |

Form PCT/ISA/210 (continuation of second sheet) (July 1992)